(19) **Europäisches Patentamt / European Patent Office / Office européen des brevets**

(11) **EP 4 518 071 A1**

(12) **EUROPEAN PATENT APPLICATION**

(43) Date of publication:
05.03.2025 Bulletin 2025/10

(21) Application number: 23220703.5

(22) Date of filing: 29.12.2023

(51) International Patent Classification (IPC):
$H02J\ 3/00^{(2006.01)}$     $H02J\ 3/14^{(2006.01)}$
$H02J\ 3/32^{(2006.01)}$

(52) Cooperative Patent Classification (CPC):
H02J 3/003; H02J 3/144; H02J 3/32

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 19.07.2023 CN 202310892322

(71) Applicant: Sungrow (Shanghai) Co., Ltd.
Shanghai 201203 (CN)

(72) Inventors:
• LIU, Xing
230088 Hefei, Anhui (CN)
• LU, Mengxuan
230088 Hefei, Anhui (CN)
• WEI, Zhengjia
230088 Hefei, Anhui (CN)

(74) Representative: Biallo, Dario et al
Barzanò & Zanardo S.p.A.
Via Borgonuovo, 10
20121 Milano (IT)

(54) **METHOD FOR DEMAND CONTROL, METHOD FOR TRAINING MODEL, ENERGY STORAGE SYSTEM AND MEDIUM**

(57) A method for demand control, a method for training a model, an energy storage system and a medium are provided. The method for demand control includes: acquiring an actual load demand, a load power, and operating status data of an energy storage system at a current moment; inputting the actual load demand, a preset degree threshold of control, the load power and the operating status data into a target demand control model, to predict an output of the energy storage system at a next moment; and regulating an output power of the energy storage system at the next moment based on the predicted output, to control a demand at the load side. The output of the energy storage system at the next moment is predicted by the target demand control model based on the real data instead of a target demand provided by a consumer, which improves the accuracy of demand control. Therefore, the demand control takes effects. Accordingly, the payment of the electricity is reduced and the benefits of the energy storage system from the demand control can achieve the expected target.

Acquire an actual load demand, a load power and operating status data of an energy storage system at the current moment    S210

↓

Input the actual load demand, a preset degree threshold of control, the load power and the operating status data into a target demand control model, to predict an output of the energy storage system at a next moment    S220

↓

Regulate an output power of the energy storage system at the next moment based on the predicted output, to regulate a demand at the load side    S230

**Figure 2**

EP 4 518 071 A1

**Description**

**FIELD**

The present disclosure relates to the technical field of demand control, and in particular to a method for demand control, a method for training a model, an energy storage system and a medium.

**BACKGROUND**

Nowadays, time-of-day electricity tariff is widely implemented in China. Electricity charges vary based on the time of day, which is divided into sharp hours, peak hours, shoulder hours, and off-peak hours in descending order of prices of electricity. The implementation of time-of-day electricity tariff aims to guide consumers to consume electricity reasonably, and to reduce the imbalance in the power system between the peak hours and the off-peak hours. The power grid is charged during the off-peak hours and discharged during the peak hours to reduce fluctuations in loads, for the power system to operate smoothly and safely. The consumers purchase electricity during the off-peak hours, and directly consume the reserved electricity during the peak hours, to reduce costs.

In view of the time-of-day electricity tariff, increasing industrial or commercial consumers use energy storage systems to store electricity, to control the demand at the load side to reduce the costs of electricity. Electrical energy demand refers to the total amount of electrical energy consumed in a specific period of time. Average power refers to the power consumed over a period of time on an average basis, and is obtained by dividing the total amount of electrical energy by the period of time. Therefore, the amount of the electrical energy demand is indicated by the average power in a specified period of time.

At present, the output of the energy storage system is generally regulated based on a demand provided by the consumer, to control the demand at the load side for the consumer. However, the demand provided by the consumer is usually determined according to practical experiences, and thus is likely excessively large or small, resulting in an increase in the costs of electricity or failure to fully charge the energy storage system.

**SUMMARY**

The present disclosure aims to solve one of the technical problems in the related art at least in a certain degree. In view of this, a method for demand control is proposed in a first aspect of the present disclosure. An output of an energy storage system at a next moment is predicted based on an actual load demand, a preset degree threshold of control, a load power and operating status data of the energy storage system at the current moment, to control the demand at the load side based on the predicted output. Therefore, benefits from the demand control can achieve an expected target.

A method for training a target demand control model is proposed in a second aspect of the present disclosure.

A device for demand control is proposed in a third aspect of the present disclosure.

A device for training a target demand control model is proposed in a fourth aspect of the present disclosure.

A system for demand control is proposed in a fifth aspect of the present disclosure.

An energy storage system is proposed in a sixth aspect of the present disclosure.

An electronic device is proposed in a seventh aspect of the present disclosure.

A computer readable storage medium is proposed in an eighth aspect of the present disclosure.

The method for demand control includes: acquiring an actual load demand, a load power, and operating status data of an energy storage system at a current moment; inputting the actual load demand, a preset degree threshold of control, the load power and the operating status data into a target demand control model, to predict an output of the energy storage system at a next moment; and regulating an output power of the energy storage system at the next moment based on the predicted output, to control a demand at the load side.

In some embodiments, the target demand control model includes a first target demand control model, and the first target demand control model is trained by: acquiring a previous load power, and determining a previous daily target demand based on the previous load power; constructing an environmental variable of a first demand control model based on the previous daily target demand, the previous load power and previous operating status data of the energy storage system; controlling an intelligent agent to perform an action under the environmental variable and feed corresponding reward data back, wherein the action comprises the output of the energy storage system; and updating parameters of the first demand control model based on the reward data until a condition for terminating training is met, to obtain the first target demand control model.

In some embodiments, the determining the previous daily target demand based on the previous load power includes: determining a mean and a standard deviation of load powers over a specified previous period based on the previous load power; and calculating a sum of the mean and the standard deviation, and determining a small one of between the sum and a maximum load demand over the specified previous period as the previous daily target demand for the specified previous period.

In some embodiments, the reward data is determined based on the previous daily target demand and an actual load demand over the specified previous period corresponding to the previous daily target demand. The updating the parameters of the first demand control model based on the reward data includes: updating the parameters of the first demand control model aiming at the reward data approaching zero.

In some embodiments, the inputting the actual load demand, the preset degree threshold of control, the load power and the operating status data into the target demand control model, to predict an output of the energy storage system at a next moment includes: determining a sum of the actual demand load and the preset degree threshold of control at the current moment as the daily target demand at the current moment, wherein the degree threshold of control indicates to what extent the demand at the load side is to be controlled; inputting the daily target demand, the load power, the operating status data at the current moment into the first target demand control model, to output a first output of the energy storage system at the next moment; determining the first output as the output at the next moment if the first output is not greater than a preset constant output; and determining the preset constant output as the output at the next moment if the first output is greater than the preset constant output.

In some embodiments, the target demand control model includes a second target demand control model. The second target demand control model is trained by: acquiring a training sample set, wherein the training sample set comprises previously actual load demands, previous operating status data of the energy storage system, previous load powers, preset degree thresholds of control, and predicted outputs at respective moments over a specified previous period; and training a second demand control model by inputting the previously actual load demands, the previous operating status data, the previous load powers and the preset degree thresholds of control and outputting the predicted outputs, until a condition for terminating training is met, to obtain the second target demand control model.

In some embodiments, the predicted outputs at the respective moments are determined by: at each of the moments, acquiring the previously actual load demand, the previous operating status data of the energy storage system, the previous load power, and the preset degree threshold of control; and inputting the previously actual load demand, the previous operating status data, the previous load power, and the preset degree threshold of control into a target programming solver, to output the predicted output.

In some embodiments, the target programming solver is constructed by: constructing a target function of the target programming solver aiming at maximizing benefits of the energy storage system from the demand control; and constructing a constraint of the target programming solver based on the output, and a state of charge (SOC) of the energy storage system, and the actual load demand.

In some embodiments, the constructing the target function of the target programming solver aiming at maximizing the benefits of the energy storage system from the demand control includes: determining the benefits based on a lump-sum payment and a payment based on an actual demand; and determining the target function aiming at maximizing the benefits.

In some embodiments, the constraint of the target programming solver includes: that the output of the energy storage system does not exceed a range from a preset lower limit to a preset upper limit inclusive; that the SOC the energy storage system is within a preset range of SOC; that the actual load demand does not exceed a preset load demand.

In some embodiments, the inputting the actual load demand, the preset degree threshold of control, the load power and the operating status data into the target demand control model, to predict the output of the energy storage system at the next moment includes: inputting the actual load demand, the preset degree threshold of control, the load power and the operating status data into a second target demand control model, to output a second output of the energy storage system as the output of the energy storage system at the next moment.

The method for training a target demand control model according to an embodiment includes: acquiring a previous load power and determining a previous daily target demand based on the previous load power; constructing an environmental variable of a first demand control model based on the previous daily target demand, the previous load power and previous operating status data of an energy storage system; controlling an intelligent agent to perform an action under the environmental variable and feed corresponding reward data back, wherein the action comprises an output of the energy storage system; and updating parameters of the first demand control model based on the reward data until a condition for terminating the training is met, to obtain a first target demand control model.

The method for training a target demand control model according to another embodiment includes: acquiring a training sample set, wherein the training sample set comprises previously actual load demands, previous operating status data of an energy storage system, previous load powers, preset degree thresholds of control, and predicted outputs at different moments over a specified previous period; and training a second demand control model by inputting the previously actual load demands, the previous operating status data, the previous load powers and the preset degree thresholds of control and outputting the predicted outputs, until a condition for terminating training is met, to obtain a second target demand control model.

The device for demand control includes: a first acquisition module, a prediction module and a control module. The first acquisition module is configured to acquire an actual load demand, a load power and operating status data of the energy storage system at the current moment. The prediction module is configured to input the actual load demand, a preset degree threshold of control, the load power and the operating status data at the current comment into a target demand control model, to predict an output of the energy storage system at the next moment. The control module is configured to regulate an output power of the energy storage system at the next moment based on the predicted output, control a demand at the load side.

The device for training a target demand control model according to an embodiment includes: a second acquisition module, a variable construction module, a reward data determination module and a parameter update module. The second acquisition module is configured to acquire a previous load power and determine a previous daily target demand based on the previous load power. The variable construction module is configured to construct an environmental variable of the first demand control model based on the previous daily target demand, the previous load power and the previous operating status data of the energy storage system. The reward data determination module is configured to control an intelligent agent to perform an action under the environmental variable and feed corresponding reward data back. The action includes an output of the energy storage system. The parameter update module is configured to update parameters of the first demand control model based on the reward data until a condition for terminating the training is met, to obtain the first target demand control model.

The device for training a target demand control model according to another embodiment includes: a third acquisition module and a training module. The third acquisition module is configured to acquire a training sample set. The training sample set includes previously actual load demands, previous operating status data of the energy storage system, the previous load powers, the preset degree thresholds of control, and the predicted outputs at different moments over a specified previous period. The training module is configured to train a second demand control model by inputting the previously actual load demands, the previous operating status data, the previous load powers and the preset degree thresholds of control and outputting the predicted outputs, until a condition for terminating the training is met, to obtain the second target demand control model.

The system for demand control includes a server and an energy storage system. The server is configured to: acquire an actual load demand, a load power, and operating status data of the energy storage system at a current moment; input the actual load demand, a preset degree threshold of control, the load power and the operating status data into a target demand control model, to predict an output of the energy storage system at a next moment; and regulate an output power of the energy storage system at the next moment based on the predicted output, to control a demand at the load side.

The energy storage system includes a processor, a memory and a computer program stored in the memory and executable by the processor. The processor is configured to execute the computer program to implement the method in the first aspect.

The electronic device includes a processor, a memory and a computer program stored in the memory and executable by the processor. The processor is configured to execute the computer program to implement the method in the second aspect.

The computer readable storage medium stores a computer program that, when executed, controls a device where the computer readable storage medium is arranged to perform the method in the first aspect.

In the embodiments of the present disclosure, the output of the energy storage system at the next moment can be predicted by the target demand control model based on the actual load demand, the preset degree threshold of control, the load power and the operating status data at the current comment. The output power of the energy storage system at the next moment is regulated based on the output, to control the demand at the load side. The output of the energy storage system at the next moment is predicted by the target demand control model based on the real data instead of the target demand provided by the consumer, which improves the accuracy of demand control. Therefore, the demand control takes effects. Accordingly, the payment of the electricity is reduced and the benefits of the energy storage system from the demand control can achieve the expected target.

The additional aspects and advantages of the present description will be further described in the following, part of which will become obvious from the following description or to be understood through the embodiments of the present description.

## BRIEF DESCRIPTION OF THE DRAWINGS

Figure 1a is a schematic diagram illustrating a demand control system according to an embodiment of the present disclosure;

Figure 1b is a schematic diagram of a household storage system according to an embodiment of the present disclosure;

Figure 2 is a flowchart illustrating a method for demand control according to an embodiment of the present disclosure;

Figure 3 is a flowchart illustrating a method for training a first target demand control model according to an embodiment of the present disclosure;

Figure 4 is a flowchart illustrating a method for training a second target demand control model according to an embodiment of the present disclosure;

Figure 5 is a structural schematic diagram illustrating a device for demand control according to an embodiment of the present disclosure;

Figure 6 is a structural schematic diagram illustrating a device for training the first target demand control model according to an embodiment of the present disclosure;

Figure 7 is a structural schematic diagram illustrating a device for training the second target demand control model according to an embodiment of the present disclosure;

Figure 8 is a structural schematic diagram illustrating an energy storage system according to an embodiment of the present disclosure; and

Figure 9 is a structural schematic diagram illustrating an electronic device according to an embodiment of the present disclosure.

## DETAILED DESCRIPTION

The embodiments of the present disclosure are described in detail hereinafter, and examples in the embodiments are shown in the drawings. The same or similar reference numerals represent the same or similar elements or elements having the same or similar functions throughout the drawings. The embodiments described below with reference to the drawings are only exemplary embodiments which are used to explain the present application, and should not be construed to limit the present application.

Nowadays, time-of-day electricity tariff is widely implemented in China. Electricity charges vary based on the time of day, which is divided into sharp hours, peak hours, shoulder hours, and off-peak hours in descending order of prices of electricity. The implementation of time-of-day electricity tariff aims to guide consumers to consume electricity reasonably, and to reduce the imbalance in the power system between the peak hours and the off-peak hours. The power grid is charged during the off-peak hours and discharged during the peak hours to reduce fluctuations in loads, for the power system to operate smoothly and safely. The consumers purchase electricity during the off-peak hours, and directly consume the reserved electricity during the peak hours, to reduce costs.

Besides, the two-part electricity tariff is implemented for industrial, commercial consumers and other consumers, whose transformer capacity is more than 100 KV or the rated capacity of an electrical device is more than 100KW. In the two-part electricity tariff, as its name suggests, the price of electricity is composed of two parts, namely, a lump-sum payment based on the transformer capacity or the demand, and a per-unit charge based on the actual usage. The lump-sum payment reflects a one-time payment for the electricity. The per-unit charge reflects the payment for the electricity made over time. The lump-sum payment is currently calculated based on the transformer capacity, the contracted maximum demand, or the actual maximum demand. The calculation of the lump-sum payment based on the actual maximum demand is the mainstream. The average power of electricity consumption by a consumer over a certain period of time (currently 15 minutes in China) within a billing cycle (generally one month) is calculated, and a maximum indicated demand is determined as the maximum demand for this billing cycle. The lump-sum payment per month is a product of actual maximum demand and the per-unit charge.

As its costs of electricity decreases, the energy storage system is used by increasing industrial and commercial consumers by taking advantage of the time-of-day electricity tariff for the purpose of arbitrage, to reduce the total costs of electricity. Since the energy storage system is charged or discharged during a period corresponding to the set unit price each time, the actual maximum demand is likely increased and the lump-sum payment is increased accordingly, resulting in a low profit and even a loss in the arbitrage. Therefore, it is necessary to implement the demand control to regulate the actual maximum demand with the energy storage system to not exceed or slightly exceed that with no energy storage system, for profits from the arbitrage by taking advantage of the time-of-day electricity tariff.

In the existing demand control solutions, the output of the energy storage system is regulated based on the actual load power or the predicted load, depending on the demand provided by the consumer, for the purpose of controlling the actual maximum demand to not exceed the demand provided by the consumer. Since the demand provided by the consumer is usually determined according to practical experiences, and thus is likely excessively large or small. An excessively large demand provided by the consumer results in an excessively large actual maximum demand, then the increased lump-sum payment, and consequently low profits from the arbitrage. An excessively small demand provided by the consumer results in failure to fully charged the energy storage system when the period corresponding to the low unit price expires. This is because that the energy storage system is not charged or charged at low power during the period corresponding to the low unit price due to limited demand. Therefore, the energy storage system fails to discharge electricity or discharges less electricity during a period corresponding to the high unit price, resulting in significantly low profits from the arbitrage by taking advantage of the peak hours and off-peak hours. That is, there is a high risk if the demand control effect relies on only the target demand set by the consumer.

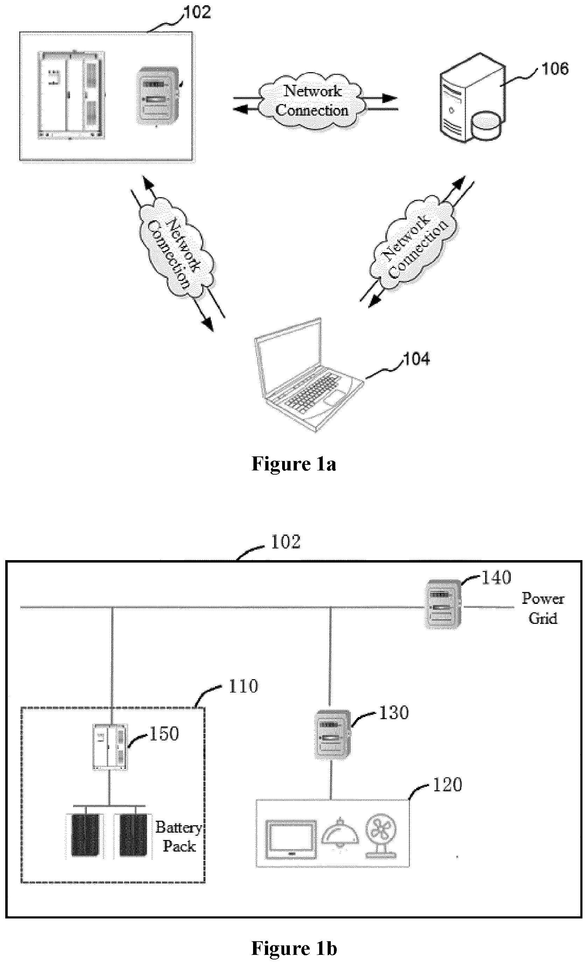

In the embodiments of the present disclosure, a method for demand control is illustrated by examples of the energy storage system in use by the industrial and commercial consumers. The method for demand control is applicable to the demand control system as shown in Figure 1a. The demand control system includes a household energy storage system 102, a client 104 and a server 106. The household energy storage system 102 includes an energy storage device and an electrical load. The server 106 is configured to train a target demand control model. The trained target demand control model is configured in the client 104. The client 104 regulates an output power of the energy storage device in the household energy storage system 102 based on an output predicted by the target demand control model, to control the demand at the load side. Therefore, benefits from the demand control can achieve an expected target.

As shown in Figure 1b, the household energy storage system 102 includes at least an energy storage device110 and an electrical load 120. The electrical load 120 is connected to a load electricity meter 130. The product of a current and a power source voltage which are measured by the load electricity meter, as the load power of the electrical load. A local controller 150 is generally arranged in the energy storage device. The local controller 150 is configured to acquire the output of the energy storage device and determine data such as electrical power of the energy storage device. The output indicates, for example, the output power. The load electricity meter 130 is generally integrated with a demand recorder. The demand recorder is configured to acquire an actual demand of the electrical load 120. The demand indicates the total electricity consumption over a certain period of time. The average power indicates the average electricity consumption over the period of time, and is calculated by dividing the total electricity consumption by the period of time. Therefore, in the embodiments of the present disclosure, the total electricity consumption is indicated by the average power over a set period of time. The average power of electricity consumption by a consumer over a period of time (currently 15 minutes in China) within a billing cycle (generally one month) is calculated, and a maximum indicated demand is determined as the maximum demand for this billing cycle.

In the embodiments, the household energy storage system 102 is communicatively connected to the server 106 and the client 104, and provides sample data to the server 106 for training the target demand control model.

For example, the server 106 trains the target demand control model firstly. The target demand control model includes a first target demand control model and a second target demand control model. Both the first target demand control model and the second target demand control model predict the output.

The first target demand control model is trained in an unsupervised manner. For example, the first target demand control model is trained as follows. Previous load power data is acquired. A previous daily target demand of the load is determined based on the previous load power data. An environmental variable for the first demand control model is constructed based on the previous daily target demand, the previous load power data and previous operating status data of the energy storage device. An intelligent agent performs an action under the environmental variable, and feeds corresponding reward data back. The action includes an output of the energy storage device. The action and the output of the energy storage device are variable. Parameters of the target demand control model are refreshed based on the reward data until a condition for terminating the training is met, to obtain the first target demand control model.

The second target demand control model is trained in a self-supervised manner. For example, the second target demand control model is trained as follows. A training sample set is acquired. The training sample set includes previously actual load demands, previous operating status data of the energy storage system, the previous load power, the preset degree threshold of control, and the predicted outputs at different moments over a specified previous period. The second demand control model is trained by inputting the previously actual load demands, the previous operating status data, the previous load power data and the preset degree threshold of control and outputting the predicted outputs, until a condition for terminating the training is met, to obtain the second target demand control model.

The first target demand control model and the second target demand control model trained by the server 106 are deployed in the client 104. The client 104 performs the method for demand control by using the first target demand control model or the second target demand control model.

For example, the client 104 acquires the actual load demand, the load power and the operating status data of the energy storage device at the current moment. The operating status data of the energy storage device at the current moment includes the state of charge (SOC) and the output power of the energy storage device at the current moment. The actual load demand, the preset degree threshold of control, the load power and the operating status data at the current moment are inputted to the target demand control model, to predict the output of the energy storage device at a next moment. The target demand control model is either the first target demand control model or the second target demand control model. Then, the output power of the energy storage system at the next moment is regulated based on the output, to control the demand at the load side. Therefore, benefits from the demand control can achieve an expected target. The benefits from the demand control indicate a difference in the payment of the electricity between the demand control in the above manner and the demand control based on the preset power at which the energy storage system is charged and discharged.

Alternatively, the first target demand control model and the second target demand control model trained by the server 106 are directly deployed in the energy storage device of the household energy storage system 102. The energy storage device predicts the output at the next moment based on the operating status data acquired by itself by using the first target demand control model and/or the second target demand control model, to regulate the output power at the next moment based on the predicted output, so as to control the demand at the load side. Alternatively, the first target demand control model and the second target demand control model trained by the server 106 are directly deployed in the server 106. The server 106 acquires the operating status data of the energy storage device, predicts the output at the next moment based on the operating status data by using the first target demand control model and/or the second target demand control model, to regulate the output power of the energy storage system at the next moment based on the predicted output, so as to control the demand at the load side.

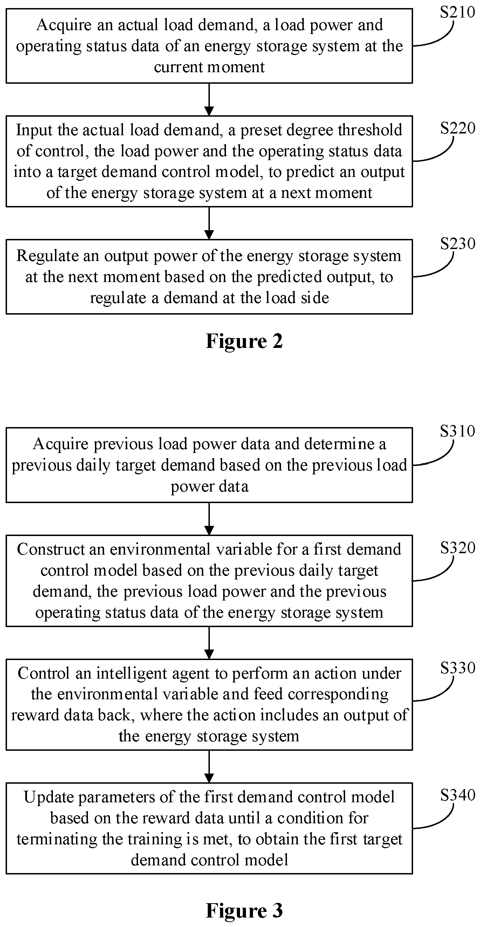

Figure 2 is a flowchart illustrating the method for demand control according to an embodiment of the present disclosure. Referring to Figure 2, the method for demand control includes the following steps S210 to S230.

In S210, an actual load demand, a load power and operating status data of the energy storage system at the current moment are acquired.

In S220, the actual load demand, the preset degree threshold of control, the load power and the operating status data at the current comment are inputted into the target demand control model, to predict an output of the energy storage system at the next moment.

In S230, the output power of the energy storage system at the next moment is regulated based on the predicted output, to regulate the demand at the load side.

In the embodiments of the present disclosure, the preset degree threshold of control indicates to what extent the demand at the load side is to be controlled. A greater positive degree threshold indicates a small degree of control. On the contrary, a small negative degree threshold indicates a large degree of control. The preset degree threshold of control is adapted to the result of the demand control at the load side in practice. Alternatively, the preset degree threshold of control is directly set to a default value. The default value is generally a quarter of a difference between a maximum and a minimum in an interval of the preset degree threshold. The interval of the degree threshold is generally from -1/2 of a range among actual maximum demands to 1/2 of the range inclusive. The daily target demand at the load side at the current moment is acquired based on the preset degree threshold and the actual load demand at the current moment.

It should be noted that, a step size in tome is preset in the embodiments of the present disclosure. The step size is in one-to-one correspondence with the moment. The step size indicates a frequency for the demand control. For example, the electrical energy demand is generally calculated at 15-minute intervals in the electric power industry, and therefore the step size is set to 15 minutes. Therefore, a period from 8:00 to 8:15 is one moment.

The actual load demand, the load power and the operating status data of the energy storage system at the current moment are acquired. The actual load demand is acquired by the demand recorder in the load electrical meter. The load power is acquired by a load electrical meter. The operating status data includes the SOC and the output power of the energy storage system at the current moment.

The actual load demand, the load power and the operating status data of the energy storage system at the current moment are inputted into the pre-trained target demand control model to predict the output at the next moment. The output power of the energy storage system at the next moment is regulated based on the output, to control the demand at the load side. Therefore, benefits from the demand control can achieve the expected target in a billing cycle. The benefit from the demand control is determined based on a first payment in one billing cycle with the demand control in the above manner and a second payment in the billing cycle with demand control based on the preset power. Generally, the benefit from the demand control is a difference between the first payment and the second payment. With the target demand control model in the embodiments of the present disclosure, the demand control can be accurately performed, the positive benefit can be obtained from the demand control, thereby reducing costs of the electricity for the consumers. In addition, in the method for demand control in the present disclosure, the output at the next moment is predicted based on the actual data of the energy storage system and the load, thereby preventing the predicted demand from being excessively small or large. In the above embodiments, the output of the energy storage system at the next moment is predicted with the target demand control model based on the actual load demand, the preset degree threshold, the load power and the operating status data of the energy storage system at the current moment. The output power of the energy storage system at the next moment is regulated based on the predicted output, to control the demand at the load side. In the embodiments of the present disclosure, the output of the energy storage system at the next moment is predicted with the target demand control model based on the actual data instead of the target demand provided by the consumer. Therefore, the demand control can be accurately performed, the positive benefit can be obtained from the demand control, thereby reducing costs of the electricity for the consumer.

In some embodiments of the present disclosure, the target demand control model includes the first target demand control model. Referring to Figure 3, the first target demand control model is trained by the following steps S310 to S340.

In S310, previous load power data is acquired, and a previous daily target demand is determined based on the previous load power data.

In S320, an environmental variable of the first demand control model is constructed based on the previous daily target demand, the previous load power and the previous operating status data of the energy storage system.

In S330, an intelligent agent performs an action under the environmental variable, and feeds back corresponding reward data. The action includes the output of the energy storage system.

In S340, parameters of the first demand control model are refreshed based on the reward data until a condition for terminating the training is met, to obtain the first target demand control model.

In the embodiments of the present disclosure, based on the actual electrical environment where the energy storage system is located, an initial first demand control model is constructed based on deep reinforcement learning algorithms such as the near-end strategy optimization algorithm, the Asynchronous Advantage Actor-Critic asynchronous algorithm or the Soft Actor Critic algorithm. Further, a control cycle and a control frequency for the demand control at the load side are determined according to the actual control requirements. For example, the control cycle is set to one day and the step size is set to 5 minutes. One step size corresponds to one moment. The demand control is performed at the load side 288 times within one control cycle.

A simulation model for the energy storage system is constructed, as the intelligent agent. Further, a state space, an action space and a reward function for the first target demand control model are constructed. The environmental variable for the state space is constructed based on the previous daily target demand, the previous load power and the previous operating status data of the energy storage system. While training the first demand control model, the intelligent agent performs an optimal action in the environment presented by the current environment variable to interact with its environment, and acquires instant reward data and an environmental variable at a next moment. The environment variable, the optimal action, and the reward data at the current moment together with the environment variable at the next moment form transfer experience, which is stored in a buffer. The parameters of the first demand control model are updated iteratively by using the deep reinforcement learning algorithms such as the near-end strategy optimization algorithm, until the first target demand control model is obtained.

The previous load power data is acquired, and data cleaning is performed on the previous load power data. The data cleaning includes, but is not limited to, deleting duplicate data, deleting an outlier, and inserting missed data. The previous daily target demand is constructed based on the previous load power data subjected to the data cleaning. Then, environment variables $s_t$ corresponding to different moments in each control cycle in a preset previous period is constructed based on the previous daily target demand, the previous load power and the previous operating status data of the energy storage system in the preset previous period. The previous operating status data includes the previous SOC and the previous output power of the energy storage system.

In the embodiments of the present disclosure, the environment variable is expressed as $s_t=\{p_{load,t}, soc_t, p_{ess,t-1}, d_t\}$. $p_{load,t}$ denotes a load power at a moment t. $soc_t$ denotes the SOC of the energy storage system at the moment t. $p_{ess,t-1}$ denotes output power of the energy storage system at a moment t-1. $d_t$ denotes a daily target demand corresponding to the moment t. The action $a_t$ includes the output of the energy storage system, measuring the output power of the energy storage system at the moment t. $a_t$ is positive or negative. When $a_t$ is positive, the energy storage system is charged. When $a_t$ is negative, the energy storage system is discharged.

The first demand control model is trained in an unsupervised manner. Using the deep reinforcement learning, the first demand control model is trained several times in the simulation environment represented by the environment variable $s_t=\{p_{load,t}, soc_t, p_{ess,t-1}, d_t\}$ corresponding to the intelligent agent at the current moment, to obtain an optimal action for the intelligent agent.

The intelligent agent takes the action $a_t$ under the environment variable $s_t=\{p_{load,t}, soc_t, p_{ess,t-1}, d_t\}$ to obtain the environment variable $s_{t+1}$ at the next moment, and feeds back instant reward data $r_t$. The parameters of the first demand control model are updated based on the reward data $r_t$ by using the deep reinforcement learning algorithm, for example, the near-end strategy optimization algorithm. A set expressed as $\{s_t, a_t, s_{t+1}, r_t\}$ is obtained. The taking the action and the updating are performed iteratively until the condition for terminating the training is met, and then the first target demand control model is obtained. The condition for terminating the training includes that the first demand control model reaches the target convergence degree. The trained first target demand control model is stored as the target demand control model.

In some embodiments of the present disclosure, the previous daily target demand of the load is determined based on the previous load power data as follows. A mean and a standard deviation of load powers over a specified previous period are determined based on the previous load power. A sum of the mean and the standard deviation of the load power data within the specified previous period is determined. A smaller between the sum and a maximum load demand within the specified previous period is determined as the previous daily target demand within the specified previous period.

Since the demand is indicated by the average power of the load powered by the power transformer over a specified period, the previous daily target demand is constructed based on the previous load power data in the present disclosure. In the embodiments of the present disclosure, the control has a one-day cycle. Therefore, for each day in the previous period, the previous daily target demand corresponding to the day is determined.

Specifically, the specified previous period corresponds to a day/date in the preset previous period. The mean and the standard deviation of the load power data within the specified previous period are determined based on the previous load power data as follows. The mean and the standard deviation of the load power data within the specified previous period are determined based on previous load power data of all moments in the specified previous period. For example, the step size is set to 5 minutes, and the specified time period corresponds to one previous date/day. Therefore, the specified previous period includes 288 moments, corresponding to 288 pieces of previous load power data. A mean the 288 pieces of previous load power data is determined as the mean of the load power data within the specified previous period, and a standard deviation of the 288 pieces of previous load power data is determined as the standard deviation of the load power data within the specified previous period.

The sum of the mean and the standard deviation of the load power data within the specified previous period is determined. The smaller between the sum and the maximum load demand within the specified previous period is determined as the previous daily target demand within the specified previous period. The maximum load demand within the specified previous period is a maximum among the 288 pieces of previous load power data.

In some embodiments of the present disclosure, the reward data is determined based on the previous daily target demand and the actual load demand over a specified previous period corresponding to the previous daily target demand. The parameters of the first demand control model are updated based on the reward data as follows. The parameters of the first demand control model are updated aiming at the reward data approaching zero.

In the embodiments of the present disclosure, the previous daily target demand for training the first demand control model is determined based on the previous load power data, rather than the real demand data. Therefore, the reward function is determined aiming at the previous daily target demand approximating the actual load demand within the specified previous period corresponding to the previous daily target demand. The reward function $r_t$ is obtained by subtracting the actual load demand from the previous daily target demand. The actual load demand is obtained with simulation by the intelligent agent executing an action $a_t$ under the condition of the environment variable $s_t=\{p_{load,t}, soc_t, p_{ess,t-1}, d_t\}$ during the training of the model. At the beginning of the training, and there is a large difference between the actual load demand and the previous daily target demand because the model converges poorly. Therefore, the reward data obtained through the reward function may be a relatively large positive or negative number. The more the reward data approximates zero, the more the previous daily target demand approximates the actual load demand. Thus, in the embodiments of the present disclosure, the parameters of the first demand control model are updated aiming at the reward data approaching zero.

In some embodiments of the present disclosure, the actual load demand, the preset degree threshold of control, the load power and the operating status data at the current moment are inputted to the target demand control model to predict the output of the energy storage system at the subsequent moment as follows. A sum of an actual current load demand and the preset degree threshold of control is determined as the daily target demand at the current moment. The degree threshold of control indicates to what extent the demand is to be controlled. The daily target demand, the load power, and the operating status data are inputted to the first target demand control model to obtain the first output of the energy storage system at the subsequent moment. The first output, if not greater than a preset constant output, is determined as the output at the subsequent moment. If the first output is greater than the preset constant output, the preset constant output is determined as the output at the subsequent moment.

In the embodiments of the present disclosure, the trained first target demand control model predicts the output based on the actual load demand, the preset degree threshold of control, the load power and the operating status data at the current moment. The first target demand control model predicts the output under the environmental variable constructed based on the daily target demand, the load power and the operating status data. Therefore, the daily target demand at the current moment is determined first.

In the embodiments of the present disclosure, the preset degree threshold of control indicates to what extent the demand at the load side is to be controlled. Therefore, the daily target demand at the current moment is determined based on the actual load demand and the preset degree threshold of control at the current moment. For example, the sum of the actual demand load and the preset degree threshold of control at the current moment is determined as the daily target demand at the current moment. The actual load demand is acquired by the demand recorder.

The first target demand control model is determined as the target demand control model. The daily target demand, the load power and the operating status data at the current moment are inputted to the first target demand control model, to predict the output at the subsequent moment.

The first target demand control model is trained in an unsupervised manner. In the embodiments of the present disclosure, the intelligent agent is trained tens of thousands of times in the simulation environment to obtain an optimal action of the intelligent agent. The previous daily target demand, adopted for training the first target demand control model in the unsupervised manner, is determined based on the previous load power data. In practice, the daily target demand is determined based on the preset degree threshold of control and the actual load demand at the current moment. Therefore, the first target demand control model may predict a large output, resulting in excessive demand at the load side. This increases the electricity costs for consumers. In view of this, respective constant outputs in different periods are preset for the energy storage system. Only when the first output at the next moment is lower than the corresponding preset constant output, the demand at the load side under the demand control is not greater than the actual demand at the load side. However, the first target demand control model may predict an excessive output due to the environmental variable.

In the embodiments of the present disclosure, after the first target demand control model, as the target demand control model, predicts the first energy storage output, the first output is compared with the preset constant output. In the case that the first output is not greater than the preset constant output, the first output is determined as the output at the next moment. In the case that the first output is greater than the preset constant output, the preset constant output is determined as the output at the next moment.

In an embodiment, previous load power data over the past year is acquired and is subjected to data cleaning. The control cycle is set to one day and the step size is set to 15 minutes. First, the daily target demand is expressed as a function of min(a sum of a mean and a standard deviation of the load power data at this day, a maximum demand at this day). Then, the first demand control model, indicating the relationship among the daily target demand, the operating status data of the energy storage system, the load power at the current moment and the output of the energy storage system at the next moment under the demand control, is constructed using the near end strategy optimization algorithm, which is one kind of the deep reinforcement learning algorithm. The intelligent agent is trained tens of thousands of times in the simulation environment, and then the optimal action of the intelligent agent is obtained. Therefore, the first target demand control model is obtained.

The preset degree threshold of control is set to -200. The actual load demand, the preset degree threshold of control, the operating status data of the energy storage system, and the load power at the current moment are inputted into the first target demand control model to obtain the output of the energy storage system at the next moment under the demand control. Here, the operating status data of the energy storage system at the current moment includes the output power of the energy storage system at the last moment and the state SOC of the energy storage system at the current moment. Finally, the preset constant output of the energy storage system at the next time is compared with the predicted output of the energy storage system at the next moment under the demand control. The minimum between the predicted output and the preset constant output at the next moment is determined as the final output of the energy storage system at the next moment.

It should be noted that the near-end strategy optimization algorithm is one kind of the deep reinforcement learning algorithm. However, the present disclosure is not limited to the near-end strategy optimization algorithm, and may also adopt other algorithms such as A3C and SAC.

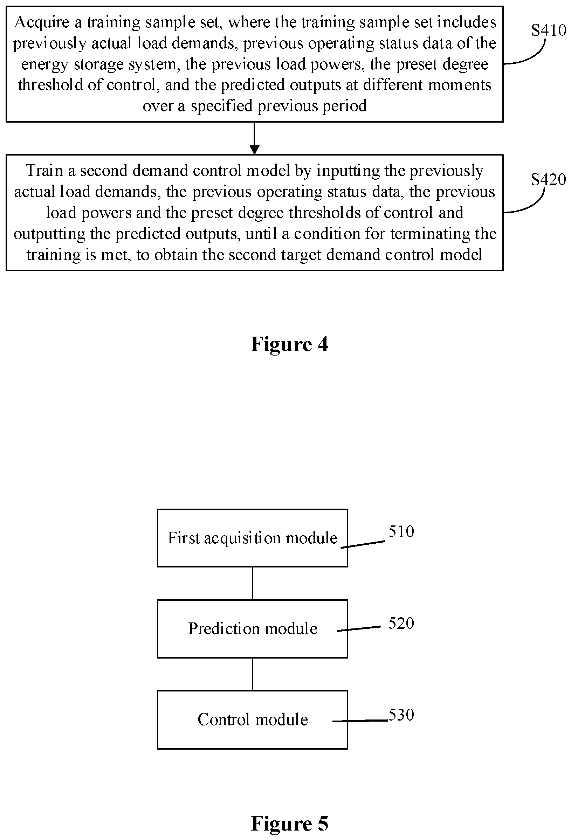

In some embodiments of the present disclosure, the target demand control model includes a second target demand control model. Referring to Figure 4, the second target demand control model is trained by the following steps S410 to S420.

In S410, a training sample set is acquired. The training sample set includes previously actual load demands, previous operating status data of the energy storage system, the previous load power, the preset degree threshold of control, and the predicted outputs at different moments over a specified previous period.

In S420, the second demand control model is trained by inputting the previously actual load demands, the previous operating status data, the previous load power data and the preset degree threshold of control and outputting the predicted outputs, until a condition for terminating the training is met, to obtain the second target demand control model.

In the embodiments of the present disclosure, the predicted output is the optimal output obtained based on the previously actual load demand, the previous operating status data of the energy storage system, the previous load power, and the preset degree threshold of control. The daily target demand is constructed based on the previous actual load demand and the preset degree threshold of control.

The range of the preset degree threshold of control is determined as follows. The actual maximum demands at the load side corresponding to all previous months are acquired, and a range among the acquired actual maximum demands is calculated. The degree threshold of control is set to be from -1/2 of the range to 1/2 of the range inclusive. Further, the control cycle and the control frequency are set.

A mapping model, i.e., the second demand control model, indicating the relationship among the actual load demand, the operating status data, the load power, the preset degree threshold of control and the output, is constructed by using a variety of machine learning algorithms or deep learning algorithms.

The second demand control model is trained, in the supervised manner, by inputting the previous actual load demands, the previous operating status data, the previous load powers, the preset degree thresholds of control at various moments in the sampling training set and outputting predicted outputs at the moments in the sample set as outputs, until a condition for terminating the training is met, to obtain the second target demand control model. The condition for terminating the training includes that the training is performed for the preset number of times, that the goodness of fit of the second demand control model reaches an expected goal, and so on.

In the above embodiments, the input sample set and the output sample set of the second demand control model are pre-constructed. The predicted output in the output sample set is the optimal output under the environmental state shown by the input sample set. Therefore, the second target demand control model with an optimal goodness of fit can be obtained through training in the supervised manner with the sampling training set. The second target demand control model can directly predict the optimal output at the next moment.

In some embodiments of the present disclosure, the predicted outputs corresponding to the moments are determined as follows. The previously actual load demands, the previous operating state data of the energy storage system, the previous load powers, and the preset degree thresholds of control at respective moments in the previous period are acquired, and are inputted into a target programming solver, to obtain the predicted outputs corresponding to the moments.

In the embodiments of the present disclosure, the target programming solver is pre-constructed in order to predict the predicted output. The control cycle is set for the demand control, and each control cycle includes multiple moments. Therefore, a target programming solver is set for each control cycle in the specified previous period, to solve the predicted outputs at respective moments in the control cycle.

The preset degree threshold of control ranges from -1/2 of the range among actual maximum demands to 1/2 of the range inclusive. In practice, the degree of control at the load side is variable instead of constant. Therefore, the preset degree threshold of control is set to the degree threshold of control within the interval at intervals of the preset step size to construct the training sample set, in order to widely include various degrees of control.

For example, the control cycle is set to a day and the moment is set to 15 minutes. For each of the moments in the control cycle, outputs corresponding to various preset degree thresholds of control are predicted. m preset degree thresholds of control are selected from the interval at intervals of the preset step size. If the specified previous period includes n control cycles, m*n target programming solvers are constructed.

For each of the control cycles, the previously actual load demands, the previous operating state data, the previous load powers and the preset degree thresholds of control at the respective moments are inputted into the corresponding target programming solver, and the predicted outputs at the respective moments in the specified previous period are obtained.

In some embodiments of the present disclosure, the target programming solver is constructed as follows. A target function of the target programming solver is constructed aiming at maximizing the benefits of the energy storage system from the demand control. The constraint for the target programming solver is constructed based on the output, the SOC and the actual load demand of the energy storage system.

In the embodiments of the present disclosure, the predicted output acquired by the target programming solver is the optimal output for the demand control at the load side under the power environment at the current moment. Therefore, the target programming solver is constructed aiming at maximizing benefits of the energy storage system from the demand control, together with the constraint of the power environment where the energy storage system is located.

The target function of the target programming solver is constructed aiming at maximizing the benefits of the energy storage system from the demand control. The constraint for the target programming solver is constructed based on the output, the SOC and the actual load demand of the energy storage system. The predicted outputs of the energy storage system at the moments in the control cycle are obtained.

In some embodiments of the present disclosure, the target function of the target programming solver is constructed aiming at maximizing the benefits of the energy storage system from the demand control as follows. The benefits of the energy storage system from the demand control are determined based on the lump-sum payment and the payment based on the actual demand of the energy storage system. The target function is determined aiming at maximizing the benefits of the energy storage system from the demand control.

For example, the control frequency is set to 15 minutes and the control cycle is set to a day. 96 moments are included in one control cycle. The target function is expressed as:

$$\max \sum_{i=0}^{95} a_i \times 15 / 60 \times price_i + (d_{src} - d_{ess}) \times price_d$$

$a_i$ indicates the output of the energy storage system at a moment i, i= 0, 1, 2, L, 95, and i=0 indicates a moment from 00:00:00. $price_d$ indicates the lump-sum payment at the moment i, $price_b$ indicates the per-unit charge at the moment i. $d_{src}$ indicates the original actual demand in the current control cycle. $d_{ess}$ indicates the regulated demand of the energy storage system in the current control cycle.

The smaller the regulated demand is, the less the payment based on the actual demand. Therefore, the demand control aims at a minimum $d_{ess}$, that is, a maximum target function.

In some embodiments of the present disclosure, the constraint of the target programming solver includes that the output of the energy storage system does not exceed a range from a preset lower limit to a preset upper limit inclusive, that the SOC the energy storage system is within a preset range of SOC, and that the actual load demand does not exceed a preset load demand.

The constraint of the target programming solver is determined on the basis that the output of the energy storage system does not exceed the range from the preset upper limit to the preset lower limit inclusive, that the SOC the energy storage system is within the preset range of SOC, and that the actual load demand does not exceed the preset load demand under the power environment where the energy storage system is located.

$$
\begin{cases}
a_i \leq A_i, \\
soc_{\min} \leq soc_i \leq soc_{\max}, \\
soc_{i+1} = \begin{cases} \min(soc_i + a_i \times \eta_{charge} \times \Delta t / E_{ess}, soc_{\max}), a_t \geq 0 \\ \max(soc_{\min}, soc_i + a_i / \eta_{discharge} \times \Delta t / E_{ess}), a_t < 0 \end{cases}, \\
soc_0 = soc_{\min}, \\
p_{load,i} - a_i \leq d_{src} + \beta, \\
d_{ess} = \max(p_{load,i} - a_i), \\
i = 0,1,2,\text{L} ,95
\end{cases}
$$

$E_{ess}$ indicates the rated capacity of the energy storage system. $SOC_{min}$ indicates the lower limit of the SOC of the energy storage system. $SOC_{max}$ indicates the upper limit of the SOC of the energy storage system, $\eta_{charge}$ indicates charging efficiency of the energy storage system. $\eta_{discharge}$ indicates discharging efficiency of the energy storage system. $\Delta t$ indicates a proportion of the moment to one hour. $p_{load,i}$ indicates the load power at the moment i. $\beta$ indicates the preset degree threshold of control. $A_i$ indicates an upper limit of the output of the energy storage system among the periods. The step size is preset to 15 minutes, and $\Delta t$ is equal to 15/60 here, and i = 0, 1, 2, L, 95.

In some embodiments of the present disclosure, the actual load demand, the preset degree threshold of control, the load power and the operating status data at the current moment are inputted to the target demand control model to predict the output of the energy storage system at the subsequent moment as follows. The actual load demand, the preset degree threshold of control, the load power and the operating status data at the current moment are inputted to the second target demand control model to predict a second output of the energy storage system at the subsequent moment.

The actual load demand, the preset degree threshold of control, the load power and the operating status data at the current moment are inputted to the second target demand control model, and the second output with better effects for the demand control is obtained. The second output is acquired by the corresponding target programming solver based on the actual load demand, the preset degree threshold of control, the load power and the operating status data at the current moment. Therefore, the second output is certainly less than the preset constant output, and is directly determined as the output of the energy storage system at the subsequent moment.

It should be noted that the preset degree threshold of control in the embodiments of the present disclosure may be set to a default value, or may be customized to adapt to the risk preference of various consumers, with strong adaptability.

In an embodiment, the previous load power data over the past 365 days is obtained and is subjected to data cleaning. The step size is set to 15 minutes. The respective actual maximum demands for the past 12 months are determined, and a range among the acquired actual maximum demands is calculated, for example, 3600kW. The preset degree threshold of control ranges from -1/2*3600 to 1/2*3600 inclusive, that is, [-1800, 1800]. The step size is set to 100. P ranges from -1800 to 1800 inclusive, and is set at 100 intervals. Therefore, 37 preset degree thresholds of control are determined. The target function and the constraint are determined as described in the above embodiments. For each of the preset degree thresholds of control $\beta$, the predicted outputs of the energy storage system at all moments are acquired by the corresponding target programming solver.

In the embodiments, $\beta$ has 37 values in total, and there are 365 days in total. The target programming solver acquires 37*365 target programming models. For each of the degree thresholds of control, optimal outputs of the energy storage system at various moments are obtained.

An input data set of the previously actual load demand, the previous operating status data of the energy storage system, the previous load power and the preset degree threshold of control is constructed, and a corresponding output data set of predicted outputs under the demand control of the energy storage system at the next moment is constructed. The operating status data of the energy storage system includes the SOC of the energy storage system at the current moment and the output power of the energy storage system at the previous moment.

Mapping models between the input data set and the output data set is constructed and trained by using algorithms such as the random forest regression, XGBoost, LSTM, Transformer. A mapping model with highest goodness of fit is selected as the final mapping model between the actual load demand, the operating status data, the load power, the preset degree threshold of control and the outputs of the energy storage system at the next moment under the demand control, that is, as the second target demand control model.

The actual load demand at the current moment is acquired, and the preset degree threshold of control is set to -500, for example. The actual load demand, the preset degree threshold of control, the operating status data of the energy storage system and the load power at the current moment are inputted into the second target demand control model to obtain the output of the energy storage system at the next moment under the demand control, for arbitrage by taking advantage of the time-of-day electricity tariff at the next moment.

It should be noted that the machine learning and deep learning models herein include, but are not limited to, those as described above.

In the above embodiments, the mapping model (that is, the second target demand control model) between the actual load demand, the operating status data, the load power, the preset degree threshold of control and the outputs of the energy storage system at the next moment under the demand control is obtained, which remedies the existing technical defects. On one hand, various degrees of control are involved. On the other hand, the calculated optimal output meets the high data quality requirements for machine learning or deep learning model training, thereby improving the accuracy of the mapping model. Therefore, the demand control takes effects. Accordingly, the payment of the electricity is reduced and the benefits of the energy storage system from the demand control can achieve the expected target.

Corresponding to the above embodiments, a method for training the target demand control model is provided according an embodiment of the present disclosure. Referring to Figure 3, the method includes the following steps S310 to S340.

In S310, previous load power data is acquired, and a previous daily target demand is determined based on the previous load power data.

In S320, an environmental variable of the first demand control model is constructed based on the previous daily target demand, the previous load power and the previous operating status data of the energy storage system.

In S330, an intelligent agent performs an action under the environmental variable, and feeds back corresponding reward data.

The action includes an output of the energy storage system.

In S340, parameters of the first demand control model are refreshed based on the reward data until a condition for terminating the training is met, to obtain the first target demand control model.

In the above embodiments, the mapping model trained repeatedly by using the deep reinforcement learning algorithm improves the accuracy of the demand control. Therefore, the demand control takes effects. Accordingly, the payment of the electricity is reduced and the benefits of the energy storage system from the demand control can achieve the expected target.

In some embodiments of the present disclosure, the previous daily target demand is determined based on the previous load power data as follows. A mean and a standard deviation of load power data over a specified previous period are determined based on the previous load power data. A sum of the mean and the standard deviation of the load power data within the specified previous period is determined. A smaller between the sum and a maximum load demand within the specified previous period is determined as the previous daily target demand within the specified previous period.

In some embodiments of the present disclosure, the reward data is determined based on the previous daily target demand and the actual load demand over a specified previous period corresponding to the previous daily target demand. The parameters of the first demand control model are updated based on the reward data as follows. The parameters of the first demand control model are updated aiming at the reward data approaching zero.

For details about the method for training the target demand control model, reference can be made to the method for training the first target demand control model as described above.

Corresponding to the above embodiments, a method for training the target demand control model is provided according another embodiment of the present disclosure. Referring to Figure 4, the method includes the following steps S410 to S420.

In S410, a training sample set is acquired.

The training sample set includes previously actual load demands, previous operating status data of the energy storage system, the previous load power, the preset degree threshold of control, and the predicted outputs at different moments over a specified previous period.

In S420, the second demand control model is trained by inputting the previously actual load demands, the previous operating status data, the previous load power data and the preset degree threshold of control and outputting the predicted outputs, until a condition for terminating the training is met, to obtain the second target demand control model.

In the above embodiments, the input sample set and the output sample set of the second demand control model are pre-constructed. The predicted output in the output sample set is the optimal output under the environmental state shown by the input sample set. Therefore, the second target demand control model with an optimal goodness of fit can be obtained through training in the supervised manner with the sampling training set. The second target demand control model can directly predict the optimal output at the next moment.

In some embodiments of the present disclosure, the predicted outputs corresponding to the moments are determined as follows. The previously actual load demands, the previous operating state data of the energy storage system, the previous load powers, and the preset degree thresholds of control at respective moments in the previous period are acquired, and are inputted into the target programming solver, to obtain the predicted outputs corresponding to the moments.

In some embodiments of the present disclosure, the target programming solver is constructed as follows. The target function of the target programming solver is constructed aiming at maximizing the benefits of the energy storage system from the demand control. The constraint for the target programming solver is constructed based on the output, the SOC and the actual load demand of the energy storage system.

In some embodiments of the present disclosure, the target function of the target programming solver is constructed aiming at maximizing the benefits of the energy storage system from the demand control as follows. The benefits of the energy storage system from the demand control are determined based on the lump-sum payment and the payment based on the actual demand of the energy storage system. The target function is determined aiming at maximizing the benefits of the energy storage system from the demand control.

In some embodiments of the present disclosure, the constraint of the target programming solver includes that the output of the energy storage system does not exceed a range from a preset lower limit to a preset upper limit inclusive, that the SOC the energy storage system is within a preset range of SOC, and that the actual load demand does not exceed a preset load demand.

For details about the method for training the target demand control model, reference can be made to the method for training the second target demand control model as described above.

Corresponding to the above embodiments, a device for demand control is provided according an embodiment of the present disclosure. Referring to Figure 5, the device includes a first acquisition module 510, a prediction module 520 and a control module 530.

The first acquisition module 510 is configured to acquire an actual load demand, a load power and operating status data of the energy storage system at the current moment.

The prediction module 520 is configured to input the actual load demand, a preset degree threshold of control, the load power and the operating status data at the current comment into a target demand control model, to predict an output of the energy storage system at the next moment.

The control module 530 is configured to regulate an output power of the energy storage system at the next moment based on the predicted output, control a demand at the load side.

With the device for demand control according to the embodiments of the present disclosure, the output of the energy storage system at the next moment can be predicted by the target demand control model based on the actual load demand, the preset degree threshold of control, the load power and the operating status data at the current comment. The output power of the energy storage system at the next moment is regulated based on the output, to control the demand at the load side. In the embodiments of the present disclosure, the output of the energy storage system at the next moment is predicted by the target demand control model based on the real data instead of the target demand provided by the consumer, which improves the accuracy of demand control. Therefore, the demand control takes effects. Accordingly, the payment of the electricity is reduced and the benefits of the energy storage system from the demand control can achieve the expected target.

For details about the device for demand control, reference can be made to method for demand control, and thus the device is not detailed herein. Modules of the device may be implemented, in whole or in part, by software, hardware and a combination of software and hardware. The modules may be embedded in or independent of a processor of a computer device in the form of hardware, or may be stored in a memory of the computer device in the form of software, for the processor to invoke and execute operations corresponding to the modules.

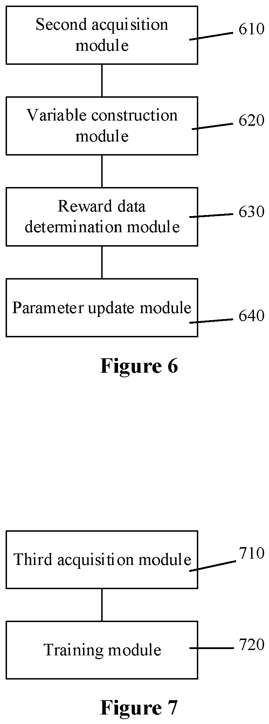

Corresponding to the above embodiments, a device for training the target demand control model is provided according an embodiment of the present disclosure. Referring to Figure 6, the device includes a second acquisition module 610, a variable construction module 620, a reward data determination module 630 and a parameter update module 640.

The second acquisition module 610 is configured to acquire a previous load power and determine a previous daily target demand based on the previous load power.

The variable construction module 620 is configured to construct an environmental variable of the first demand control model based on the previous daily target demand, the previous load power and the previous operating status data of the energy storage system.

The reward data determination module 630 is configured to control an intelligent agent to perform an action under the environmental variable and feed corresponding reward data back. The action includes an output of the energy storage system.

The parameter update module 640 is configured to update parameters of the first demand control model based on the reward data until a condition for terminating the training is met, to obtain the first target demand control model.

With the device for training the target demand control model in the embodiments of the present disclosure, the mapping model trained repeatedly by using the deep reinforcement learning algorithm improves the accuracy of the demand control. Therefore, the demand control takes effects. Accordingly, the payment of the electricity is reduced and the benefits of the energy storage system from the demand control can achieve the expected target.

For details about the device for training the target demand control model, reference can be made to method for training the first target demand control model, and thus the device is not detailed herein. Modules of the device may be implemented, in whole or in part, by software, hardware and a combination of software and hardware. The modules may be embedded in or independent of a processor of a computer device in the form of hardware, or may be stored in a memory of the computer device in the form of software, for the processor to invoke and execute operations corresponding to the modules.

Corresponding to the above embodiments, a device for training the target demand control model is provided according an embodiment of the present disclosure. Referring to Figure 7, the device includes a third acquisition module 710 and a training module 720.

The third acquisition module 710 is configured to acquire a training sample set. The training sample set includes previously actual load demands, previous operating status data of the energy storage system, the previous load powers, the preset degree thresholds of control, and the predicted outputs at different moments over a specified previous period.

The training module 720 is configured to train a second demand control model by inputting the previously actual load demands, the previous operating status data, the previous load powers and the preset degree thresholds of control and outputting the predicted outputs, until a condition for terminating the training is met, to obtain the second target demand control model.

With device for training the target demand control model according to the embodiments of the present disclosure, the input sample set and the output sample set of the second demand control model are pre-constructed. The predicted output in the output sample set is the optimal output under the environmental state shown by the input sample set. Therefore, the second target demand control model with an optimal goodness of fit can be obtained through training in the supervised manner with the sampling training set. The second target demand control model can directly predict the optimal output at the next moment.

For details about the device for training the target demand control model, reference can be made to method for training the second target demand control model, and thus the device is not detailed herein. Modules of the device may be implemented, in whole or in part, by software, hardware and a combination of software and hardware. The modules may be embedded in or independent of a processor of a computer device in the form of hardware, or may be stored in a memory of the computer device in the form of software, for the processor to invoke and execute operations corresponding to the modules.

Corresponding to the above embodiments, an energy storage system is further provided according to an embodiment of the present disclosure.

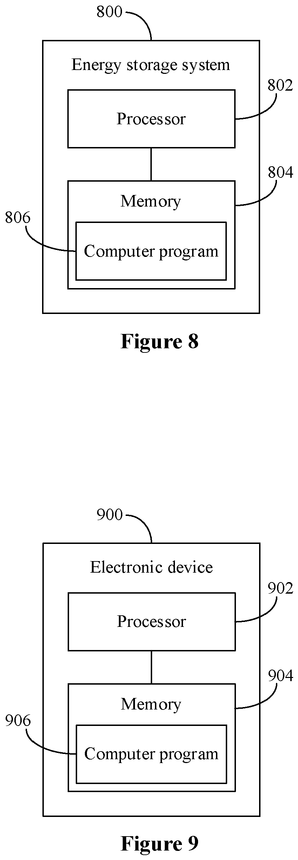

Figure 8 is a structural block diagram illustrating the energy storage system according to an embodiment of the present disclosure. As shown in Figure 8, the energy storage system 800 includes a memory 804, a processor 802, and a computer program 806 stored in the memory 804 and executable by processor 802. The processor 802 is configured to execute the computer program 806 to implement the method for demand control according to the above embodiments.

With the energy storage system according to the embodiments of the present disclosure, the processor 802 executes the computer program 806, so that the output of the energy storage system is predicted by the target demand control model based on the real data instead of the target demand provided by the consumer, which improves the accuracy of demand control. Therefore, the demand control takes effects. Accordingly, the payment of the electricity is reduced and the benefits of the energy storage system from the demand control can achieve the expected target.

Corresponding to the above embodiments, an electronic device is further provided according to an embodiment of the present disclosure.

Figure 9 is a structural block diagram illustrating the electronic device according to an embodiment of the present disclosure. As shown in Figure 9, the electronic device 900 includes a memory 904, a processor 902 and a computer program 906 stored in the memory 904 and executable by processor 902. The processor 902 is configured to execute the computer program 906 to implement the method for demand control according to the above embodiments.

With the electronic device according to the embodiments of the present disclosure, the processor 902 executes the computer program 906, so that the output of the energy storage system is predicted by the target demand control model based on the real data instead of the target demand provided by the consumer, which improves the accuracy of demand control. Therefore, the demand control takes effects. Accordingly, the payment of the electricity is reduced and the benefits of the energy storage system from the demand control can achieve the expected target.

Corresponding to the above embodiments, a computer readable storage medium is further provided according to an embodiment of the present disclosure. The computer readable storage medium stores a computer program that, when executed, controls a device where the computer readable storage medium is arranged to perform at least one of the method for demand control and the method for training the target demand control model according to any one of the above embodiments.

With the computer readable storage medium according to the embodiments of the present disclosure, when the computer program is executed, the output of the energy storage system is predicted by the target demand control model based on the real data instead of the target demand provided by the consumer, which improves the accuracy of demand control. Therefore, the demand control takes effects. Accordingly, the payment of the electricity is reduced and the benefits of the energy storage system from the demand control can achieve the expected target.

It should be noted that the logic and/or steps, as shown in the flowchart or otherwise described herein, for example, may be considered to be a sequenced list of executable instructions for implementing the logical functions and implemented on any computer readable in the medium, for use by or in combination with an instruction execution system, device or apparatus (such as a computer-based system, a system including a processor, or other system that invokes instructions from an instruction execution system, device or apparatus and executes the instructions). In the present disclosure, "the computer readable medium" be a device that contains, stores, communicates, broadcasts or transmit programs, for use by or in combination with the instruction execution system, device or apparatus. More specific examples of the computer readable medium include, but not limited to, an electrical connection unit (e.g., an electronic device) having one or more wires, a portable computer disk case (e.g., a magnetic device), a random-access memory (RAM), a read-only memory (ROM), an erasable programmable read-only memory (EPROM or flash memory), an optical fiber device, and a portable optical disc read-only memory (CDROM). In addition, the computer readable medium may even be a piece of paper or other suitable medium on which the program is printed. This is because that the program can be obtained electronically, for example, by optically scanning the paper or the other medium followed by editing, interpreting or, if necessary, by other suitable processing, and then stored in the computer memory.

It should be understood that embodiments of the present disclosure may be implemented in hardware, software, firmware, or a combination thereof. In the above embodiments, steps or methods may be implemented by software or firmware stored in the memory and executed by a suitable instruction execution system. For example, the steps or methods are implemented in hardware, as the same in another embodiment, using any one or a combination of the following technologies known in the field: a logic circuit with a logic gate for implementing logic functions on a data signal, a specialized integrated circuit with a suitable combinational logic gate, a programmable gate array (PGA), a field programmable gate array (FPGA), etc.

Throughout the description, the expressions "an embodiment", "some embodiments", "an example", "specific example " and "some examples", etc. indicate that features, structures, materials or characteristics described in the embodiments or examples are included in at least one embodiment or example of the present disclosure. In this description, schematic expressions of the above terms do not necessarily refer to the same embodiment or example. Furthermore, the specific features, structures, materials or characteristics described may be combined in any suitable manner in any one or more embodiments or examples.

Furthermore, the terms "first", "second" and the like in the embodiments of the present disclosure are merely for purpose of description, and should not be construed as indicating or implying relative importance or implying the number of the indicated technical features in the embodiments. Therefore, the feature defined by "first" or "second" in the embodiments of the present disclosure explicitly or implicitly indicates that there is at least one such feature included in the embodiments. In the description, the terms "multiple" means at least two or more than two, such as two, three, four and so on, unless specifically and clearly limited in the embodiments otherwise.

Although the embodiments of the description have been illustrated and described above, it should be understood that the embodiments described above are only exemplary, and should not be understood as limitation for the description. Changes, modifications, substitutions and alternations can be made to the embodiments described above by those skilled in the art within the scope of the description.

**Claims**

1.  A method for demand control, comprising:

acquiring an actual load demand, a load power, and operating status data of an energy storage system at a current moment;

inputting the actual load demand, a preset degree threshold of control, the load power and the operating status data into a target demand control model, to predict an output of the energy storage system at a next moment; and

regulating an output power of the energy storage system at the next moment based on the predicted output, to control a demand at the load side.

2. The method according to claim 1, wherein the target demand control model comprises a first target demand control model, and the first target demand control model is trained by:

acquiring a previous load power, and determining a previous daily target demand based on the previous load power;

constructing an environmental variable of a first demand control model based on the previous daily target demand, the previous load power and previous operating status data of the energy storage system;

controlling an intelligent agent to perform an action under the environmental variable and feed corresponding reward data back, wherein the action comprises the output of the energy storage system; and

updating parameters of the first demand control model based on the reward data until a condition for terminating training is met, to obtain the first target demand control model.

3. The method according to claim 2, wherein the determining the previous daily target demand based on the previous load power comprises:

determining a mean and a standard deviation of load powers over a specified previous period based on the previous load power; and

calculating a sum of the mean and the standard deviation, and determining a small one of between the sum and a maximum load demand over the specified previous period as the previous daily target demand for the specified previous period.

4. The method according to claim 2, wherein the reward data is determined based on the previous daily target demand and an actual load demand over the specified previous period corresponding to the previous daily target demand, and the updating the parameters of the first demand control model based on the reward data comprises:
updating the parameters of the first demand control model aiming at the reward data approaching zero.

5. The method according to claim 1, wherein the inputting the actual load demand, the preset degree threshold of control, the load power and the operating status data into the target demand control model, to predict an output of the energy storage system at a next moment comprises:

determining a sum of the actual demand load and the preset degree threshold of control at the current moment as the daily target demand at the current moment, wherein the degree threshold of control indicates to what extent the demand at the load side is to be controlled;

inputting the daily target demand, the load power, the operating status data at the current moment into the first target demand control model, to output a first output of the energy storage system at the next moment;

determining the first output as the output at the next moment if the first output is not greater than a preset constant output; and

determining the preset constant output as the output at the next moment if the first output is greater than the preset constant output.

6. The method according to claim 1, wherein the target demand control model comprises a second target demand control model, and the second target demand control model is trained by:

acquiring a training sample set, wherein the training sample set comprises previously actual load demands, previous operating status data of the energy storage system, previous load powers, preset degree thresholds of control, and predicted outputs at respective moments over a specified previous period; and

training a second demand control model by inputting the previously actual load demands, the previous operating status data, the previous load powers and the preset degree thresholds of control and outputting the predicted outputs, until a condition for terminating training is met, to obtain the second target demand control model.

7. The method according to claim 6, wherein the predicted outputs at the respective moments are determined by: at each of the moments,

acquiring the previously actual load demand, the previous operating status data of the energy storage system, the previous load power, and the preset degree threshold of control; and

inputting the previously actual load demand, the previous operating status data, the previous load power, and the preset degree threshold of control into a target programming solver, to output the predicted output.

8. The method according to claim 7, wherein the target programming solver is constructed by:

constructing a target function of the target programming solver aiming at maximizing benefits of the energy storage system from the demand control; and

constructing a constraint of the target programming solver based on the output, and a state of charge, SOC, of the energy storage system, and the actual load demand.

9. The method according to claim 8, wherein the constraint of the target programming solver comprises:

that the output of the energy storage system does not exceed a range from a preset lower limit to a preset upper limit inclusive;

that the SOC the energy storage system is within a preset range of SOC; and

that the actual load demand does not exceed a preset load demand.

10. The method according to claim 1, wherein the inputting the actual load demand, the preset degree threshold of control, the load power and the operating status data into the target demand control model, to predict the output of the energy storage system at the next moment comprises:

inputting the actual load demand, the preset degree threshold of control, the load power and the operating status data into a second target demand control model, to output a second output of the energy storage system as the output of the energy storage system at the next moment.

11. A method for training a target demand control model, comprising:

acquiring a previous load power and determining a previous daily target demand based on the previous load power;

constructing an environmental variable of a first demand control model based on the previous daily target demand, the previous load power and previous operating status data of an energy storage system;

controlling an intelligent agent to perform an action under the environmental variable and feed corresponding reward data back, wherein the action comprises an output of the energy storage system; and

updating parameters of the first demand control model based on the reward data until a condition for terminating the training is met, to obtain a first target demand control model.

12. A method for training a target demand control model, comprising:

acquiring a training sample set, wherein the training sample set comprises previously actual load demands, previous operating status data of an energy storage system, previous load powers, preset degree thresholds of control, and predicted outputs at different moments over a specified previous period; and

training a second demand control model by inputting the previously actual load demands, the previous operating status data, the previous load powers and the preset degree thresholds of control and outputting the predicted outputs, until a condition for terminating training is met, to obtain a second target demand control model.

13. An energy storage system, comprising:

a processor;

a memory; and

a computer program stored in the memory and executable by the processor, wherein the processor is configured to execute the computer program to implement the method according to any one of claims 1 to 10.

14. An electronic device, comprising:

a processor;

a memory, and;
a computer program stored in the memory and executable by the processor, wherein the processor is configured to execute the computer program to implement the method according to claim 11 or 12.

15. A computer readable storage medium, storing a computer program that, when executed, controls a device where the computer readable storage medium is arranged to perform the method according any one of claims 1 to 10.

**Figure 1a**

**Figure 1b**

Acquire an actual load demand, a load power and operating status data of an energy storage system at the current moment

S210

Input the actual load demand, a preset degree threshold of control, the load power and the operating status data into a target demand control model, to predict an output of the energy storage system at a next moment

S220

Regulate an output power of the energy storage system at the next moment based on the predicted output, to regulate a demand at the load side

S230

**Figure 2**

Acquire previous load power data and determine a previous daily target demand based on the previous load power data

S310

Construct an environmental variable for a first demand control model based on the previous daily target demand, the previous load power and the previous operating status data of the energy storage system

S320

Control an intelligent agent to perform an action under the environmental variable and feed corresponding reward data back, where the action includes an output of the energy storage system

S330

Update parameters of the first demand control model based on the reward data until a condition for terminating the training is met, to obtain the first target demand control model

S340

**Figure 3**

Acquire a training sample set, where the training sample set includes previously actual load demands, previous operating status data of the energy storage system, the previous load powers, the preset degree threshold of control, and the predicted outputs at different moments over a specified previous period    S410

Train a second demand control model by inputting the previously actual load demands, the previous operating status data, the previous load powers and the preset degree thresholds of control and outputting the predicted outputs, until a condition for terminating the training is met, to obtain the second target demand control model    S420

**Figure 4**

First acquisition module    510

Prediction module    520

Control module    530

**Figure 5**

```
┌─────────────────────────┐
│   Second acquisition     │──── 610
│       module             │
└─────────────────────────┘
            │
┌─────────────────────────┐
│  Variable construction   │──── 620
│       module             │
└─────────────────────────┘
            │
┌─────────────────────────┐
│    Reward data           │──── 630
│  determination module    │
└─────────────────────────┘
            │
┌─────────────────────────┐
│  Parameter update module │
│                          │──── 640
└─────────────────────────┘
```

**Figure 6**

```
┌─────────────────────────┐
│ Third acquisition module │──── 710
└─────────────────────────┘
            │
┌─────────────────────────┐
│    Training module       │──── 720
└─────────────────────────┘
```

**Figure 7**

800

Energy storage system

Processor — 802

Memory — 804

806 — Computer program

**Figure 8**

900

Electronic device

Processor — 902

Memory — 904

906 — Computer program

**Figure 9**

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 23 22 0703

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/005201 A1 (FIFE JOHN MICHAEL [US] ET AL) 2 January 2020 (2020-01-02) | 1,5-10, 13,15 | INV. H02J3/00 |
| Y | * paragraph [0156] - paragraph [0458] * | 2-4 | H02J3/14 H02J3/32 |
| | ----- | | |
| Y | CN 112 330 021 A (CN ELECT TECH NO 18 RES INST) 5 February 2021 (2021-02-05) * the whole document * | 2-4 | |
| | ----- | | |
| A | AU 2017 368 470 A1 (PEAK POWER INC [CA]) 11 July 2019 (2019-07-11) * paragraph [0021] - paragraph [0099] * | 1-10,13, 15 | |
| | ----- | | |
| A | US 2021/221247 A1 (DANIEL SIMON RICHARD [GB] ET AL) 22 July 2021 (2021-07-22) * paragraph [0127] - paragraph [0214] * | 1-10,13, 15 | |
| | ----- | | |

**TECHNICAL FIELDS SEARCHED (IPC)**

H02J

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 17 January 2025 | Dudoignon, David |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................
& : member of the same patent family, corresponding
   document

EPO FORM 1503 03.82 (P04E07)

Europäisches
Patentamt

European
Patent Office

Office européen
des brevets

**INCOMPLETE SEARCH
SHEET C**

```
Claim(s) completely searchable:
      1-10, 13, 15

Claim(s) not searched:
      11, 12, 14

Reason for the limitation of the search:

Claims 1, 11, 12 have been drafted as separate independent claims.
Under Article 84 in combination with Rule 43(2) EPC, an application may
contain more than one independent claim in a particular category only if
the subject-matter claimed falls within one or more of the exceptional
situations set out in paragraph (a), (b) or (c) of Rule 43(2) EPC. This
is not the case in the present application, however, for the following
reason(s): claims 1, 11, 12 are method claims and do not fall under the
before-mentionned exception.
The applicant has been asked under R. 62a (1) EPC, which claimed should
be searched and he replied to issue the search for the claims 1-10, 13,
15.
```

## ANNEX TO THE EUROPEAN SEARCH REPORT
## ON EUROPEAN PATENT APPLICATION NO.

EP 23 22 0703

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | Publication date | Patent family member(s) | | Publication date |
|---|---|---|---|---|
| US 2020005201 A1 | 02-01-2020 | US | 2020005201 A1 | 02-01-2020 |
| | | US | 2020006946 A1 | 02-01-2020 |
| CN 112330021 A | 05-02-2021 | NONE | | |
| AU 2017368470 A1 | 11-07-2019 | AU | 2017368470 A1 | 11-07-2019 |
| | | CA | 3045324 A1 | 07-06-2018 |
| | | EP | 3549234 A1 | 09-10-2019 |
| | | JP | 7051856 B2 | 11-04-2022 |
| | | JP | 7482167 B2 | 13-05-2024 |
| | | JP | 2020501491 A | 16-01-2020 |
| | | JP | 2022104955 A | 12-07-2022 |
| | | US | 2019312457 A1 | 10-10-2019 |
| | | WO | 2018098575 A1 | 07-06-2018 |
| US 2021221247 A1 | 22-07-2021 | AU | 2019289918 A1 | 14-01-2021 |
| | | CA | 3104595 A1 | 26-12-2019 |
| | | CN | 113169579 A | 23-07-2021 |
| | | EP | 3811490 A1 | 28-04-2021 |
| | | EP | 4287439 A2 | 06-12-2023 |
| | | EP | 4287440 A2 | 06-12-2023 |
| | | EP | 4287441 A2 | 06-12-2023 |
| | | GB | 2577853 A | 15-04-2020 |
| | | JP | 2021528752 A | 21-10-2021 |
| | | JP | 2024147557 A | 16-10-2024 |
| | | KR | 20210042898 A | 20-04-2021 |
| | | US | 2021221247 A1 | 22-07-2021 |
| | | WO | 2019243524 A1 | 26-12-2019 |

EPO FORM P0459

For more details about this annex : see Official Journal of the European Patent Office, No. 12/82